# FASCICULE DE BREVET EUROPEEN

(11) **EP 2 740 905 B1**
(45) Date de publication et mention de la délivrance du brevet: **18.03.2020**
(21) Numéro de dépôt: 12195999.3
(22) Date de dépôt: 07.12.2012
(51) Int. Cl.: F01D 25/02, F02C 7/047

(54) **BEC DE SÉPARATION D'UNE TURBOMACHINE AXIALE, COMPRESSEUR ET TURBOMACHINE AXIALE ASSOCIÉS**
SPLITTER EINER AXIALEN TURBOMASCHINE, ZUGEHORIGER VERDICHTER UND AXIALE TURBOMASCHINE
SPLITTER OF AN AXIAL TURBOMACHINE, CORRESPONDING COMPRESSOR AND AXIAL TURBOMACHINE

(43) Date de publication de la demande: 11.06.2014
(73) Titulaire: Safran Aero Boosters SA, 4041 Herstal (BE)
(72) Inventeur: Thise, Frederick, 4690 Wonck (BE)
(74) Mandataire: Lecomte & Partners

(56) Documents cités:
- GB-A- 2 442 967
- US-A- 4 860 534
- US-A1- 2005 023 412
- US-A1- 2010 236 213

## Description

### Domaine technique

L'invention a trait aux turbomachines axiales double flux. Plus précisément, l'invention a trait au bec de séparation d'une turbomachine axiale double flux, le bec séparant le flux entrant en un flux primaire et en un flux secondaire. Plus précisément encore, l'invention a trait au dégivrage du bec de séparation.

### Technique antérieure

Afin d'optimiser leur poussée, les turboréacteurs travaillent avec plusieurs flux d'air annulaires. Un flux primaire traverse un compresseur, une chambre de combustion, puis est détendu dans une turbine. Un flux secondaire contourne par l'extérieur le compresseur, la chambre de combustion, la turbine, et regagne ensuite le flux primaire en sortie du turboréacteur. Les flux sont séparés par un bec de séparation placé en amont du compresseur. Sa forme permet de couper le flux d'air entrant dans la turbomachine et limite l'entrée dans le compresseur. En étant placé en aval des aubes de la soufflante, il est exposé aux ingestions de corps étrangers.

L'air entrant dans la turbomachine reste à température atmosphérique au niveau du bec de séparation. Ces températures peuvent descendre à - 50°C en altitude. En présence d'humidité, de la glace peut se former sur le bec. En cours de vol, cette glace peut s'étendre et s'accumuler jusqu'à former des blocs en tête d'aubes statoriques du compresseur.

Ces blocs peuvent modifier la géométrie du bec et influer sur le flux d'air entrant dans le compresseur, ce qui peut en réduire le rendement. A force de se développer, les blocs peuvent devenir particulièrement massifs. Par la suite, ils risquent de se détacher et d'être ingérés par le compresseur, risquant de dégrader au passage les aubes rotoriques et statoriques. Cette ingestion est particulièrement pénalisante tant elle ne subit pas au préalable un passage dans la soufflante.

Pour limiter cette formation de glace, les becs de séparation sont munis d'un dispositif de dégivrage.

Le document US 6,561,760 B2 présente un système de dégivrage de bec de séparation à l'aide des gaz d'échappement. Le bec est formé d'une paroi externe et d'une virole externe. Cette dernière supporte une rangée annulaire d'aubes de redresseur. Le bec de séparation comprend une fente circulaire dans laquelle s'engage un bord amont de la virole externe. L'interface de la fente est travaillée de sorte à ménager des canaux axiaux dans l'épaisseur des éléments. Ces canaux autorisent une circulation des gaz d'échappement, ce qui a pour effet de réchauffer le bord d'attaque du bec de séparation. Ce dernier est ainsi prémuni contre une formation de glace. Or cette solution nécessite des usinages complexes. L'efficacité est principalement concentrée au niveau des canaux et dépend de la conductivité thermique des matériaux. Il devient difficile de choisir un autre matériau, par exemple plus résistant ou plus léger, si sa conduction thermique est faible. Aussi, ce système impose de rejeter une partie des gaz d'échappement dans le turboréacteur.

Une autre solution connue consiste à effectuer le dégivrage à l'aide d'huile qui a justement besoin d'être refroidie. Cette huile peut être une huile moteur ou une huile d'actionneur dont le contrôle de la température permet de préserver le turboréacteur et de fonctionner dans des conditions optimales.

Le document EP 2 075 194 A1 divulgue un échangeur air huile permettant de refroidir l'huile d'un turboréacteur. L'échangeur comprend un circuit d'huile disposé à l'intérieur du bec de séparation. Le circuit peut être disposé sur une face intérieure du bec de séparation ou encore dans son épaisseur. Ce système permet efficacement de dégivrer le bec tout en refroidissant l'huile. Cet échangeur est cependant compliqué à mettre en œuvre. Son efficacité peut être réduite en extrémité amont du bec de séparation lorsque celui-ci est épais, par exemple pour des considérations de résistance mécanique.

Le document EP 1 942 249 A2 divulgue un bec de séparation selon le préambule de la revendication 1. Plus spécifiquement, il divulgue un système de transfert de chaleur pour une turbomachine. Le système comprend un jeu de tuyaux s'étendant sur le périmètre du bec de séparation de la turbomachine. Sur son périmètre, les tuyaux sont logés dans une cavité annulaire entre les parois délimitant les flux primaire et secondaire. Les tuyaux y sont protégés mécaniquement. En étant plaqués contre la paroi délimitant le flux secondaire, ils permettent une conduction thermique favorisant le dégivrage. Cependant, l'efficacité du tuyau est réduite au niveau du bord d'attaque du bec de séparation en raison de la distance qui l'en sépare. La pointe du bec est massive, et présente donc une inertie thermique importante. Lorsque le système doit fonctionner de manière discontinue, il est moins réactif. En raison des variations d'épaisseurs des éléments au voisinage du tuyau, une partie peut être froide tandis qu'une autre est chaude, ou en tout cas à une température bien au-dessus de ce qui est nécessaire pour effectuer un dégivrage. Le fonctionnement d'un tel système n'est pas homogène. Aussi, le tube est essentiellement implanté en partie supérieure ou externe (par rapport à l'axe de rotation de la machine) du bec. Son efficacité est moindre en partie inférieure (ou interne) et risque de laisser se développer de la glace sur la virole externe du redresseur.

Les documents GB 2 442 967 A, US 2010/0236213 A1 et US 4,860,534 divulguent, chacun, un bec de séparation avec un canal de dégivrage délimité par les parois de guidage du flux formant le bec de séparation. Le document US 2005/0023412 A1 divulgue une nacelle de turboréacteur, avec un bord de séparation logeant un canal de dégivrage et de refroidissement d'huile.

### Résumé de l'invention

### Problème technique

L'invention a pour objectif de résoudre au moins un des problèmes soulevés par l'art antérieur. L'invention a également pour objectif d'améliorer l'efficacité d'un système de dégivrage à huile dans la partie amont d'un bec de séparation. L'invention a également pour objectif d'améliorer l'efficacité d'un système de dégivrage à huile en amont du premier étage de redresseur. L'invention a également pour objectif de pouvoir alléger un bec de séparation muni d'un dispositif de dégivrage à huile. L'invention a également pour objectif de pouvoir affiner le bec de séparation.

### Solution technique

L'invention a pour objet un bec de séparation d'une turbomachine axiale apte à séparer un flux annulaire entrant dans la turbomachine en un flux primaire et en un flux secondaire, le bec comprenant :
- un bord d'attaque annulaire ;
- des parois de guidage des flux primaire et secondaire, s'étendant depuis le bord d'attaque ;
- un canal de dégivrage du bord d'attaque s'étendant de manière annulaire le long dudit bord, le canal étant configuré pour conduire un fluide, et comprenant une paroi dont la section transversale présente un contour fermé ;
remarquable en ce que la paroi du canal forme le bord d'attaque, les parois de guidage des flux primaire et secondaire étant fixées à la dite paroi.

Selon un mode avantageux de l'invention, le contour fermé présente un profil circulaire ou ellipsoïdal, le grand axe de l'ellipse étant incliné vers l'amont et le centre de la turbomachine par rapport à l'axe principal d'écoulement du bec, l'inclinaison étant préférentiellement comprise entre 5° et 30°.

Selon un mode avantageux de l'invention, la paroi du canal de dégivrage présente une épaisseur variable, l'épaisseur étant préférentiellement réduite sur une partie amont du canal.

Selon un mode avantageux de l'invention, la paroi du canal de dégivrage est montée par encastrement sur l'une ou au moins une des parois de guidage des flux primaire et secondaire, l'encastrement étant préférentiellement discontinu le long du profil annulaire du bord d'attaque.

Selon un mode avantageux de l'invention, le bec de séparation comprend une pièce intermédiaire disposée entre la paroi du canal de dégivrage et le corps, préférentiellement la pièce intermédiaire comprend un matériau isolant.

Selon un mode avantageux de l'invention, le contour de la section transversale de la paroi du canal de dégivrage comprend une portion avec un rayon de courbure inférieur à 10,00 mm, préférentiellement inférieur à 5,00 mm, plus préférentiellement inférieur à 2,00 mm, encore plus préférentiellement inférieur à 1,00 mm, ladite portion formant l'extrémité amont du bord d'attaque.

Selon un mode avantageux de l'invention, le canal est segmenté et comprend au moins deux segments qui parcourent chacun sensiblement la moitié du profil annulaire du bord d'attaque, le canal comprenant préférentiellement six segments de canaux parcourant chacun sensiblement un sixième dudit profil.

Selon un mode avantageux de l'invention, la paroi de guidage du flux secondaire forme un corps de révolution dudit bec, la paroi de guidage du flux primaire formant une virole externe de redresseur aubagé.

Selon un mode avantageux de l'invention, le bec de séparation comprend des bandes de fixation, préférentiellement métalliques, disposées contre la paroi du canal de dégivrage et les parois de guidage des flux primaire et secondaire.

Selon un mode avantageux de l'invention, la partie amont de la paroi de guidage du flux primaire est reliée à la paroi de guide du flux secondaire par l'intermédiaire de la paroi du canal de dégivrage.

Selon un mode avantageux de l'invention, le bec comprend une gorge annulaire de réception d'un bord amont de la paroi de guidage du flux primaire, le canal de dégivrage étant situé en amont de ladite gorge.

L'invention a également pour objet un compresseur de turbomachine axiale, comprenant un bec de séparation apte à séparer un flux annulaire entrant dans la turbomachine en un flux primaire et en un flux secondaire, remarquable en ce que le bec de séparation est conforme à l'invention.

L'invention a également pour objet une turbomachine axiale comprenant une soufflante d'entrée suivie d'un compresseur, remarquable en ce que le compresseur est conforme à l'invention.

Selon des modes particuliers de réalisation, l'invention peut comprendre une ou plusieurs des caractéristiques divulguées ci-avant, prises isolément ou selon certaines combinaisons.

### Avantages apportés

L'invention permet de dégivrer de manière optimale le bec de séparation notamment au niveau de son bord d'attaque. Par ce biais, une surface plus importante du bec peut être traitée. Les calories du fluide traversent une épaisseur réduite de matière, ce qui permet d'améliorer l'efficacité thermique du dispositif. Cette configuration favorise un dégivrage du bec de séparation en apportant une efficacité homogène sur ses deux parois de séparation des flux primaire et secondaire.

Cette architecture de bec de séparation est simple. Elle permet à la fois de l'alléger et de réaliser des économies. Des zones de matière peuvent être supprimées par rapport à un bec conventionnel. Les procédés de fabrications peuvent également être simplifiés.

L'invention emploie l'huile de la turbomachine pour récupérer des calories. Le fluide caloporteur permet de circuler dans des conduits de section réduite et qui présentent des coudes. L'air chaud est particulièrement fluide, ce qui lui permet de circuler dans des sections réduites. L'huile offre une capacité thermique élevée, qui permet de travailler à température réduite afin de s'adapter à certains matériaux.

### Brève description des dessins

La figure 1 représente une turbomachine axiale selon l'invention.
La figure 2 illustre le compresseur basse-pression de la turbomachine de la figure 1.
La figure 3 illustre un bec de séparation de turbomachine axiale selon un premier mode de réalisation de l'invention.
La figure 4 illustre un bec de séparation de turbomachine axiale selon un deuxième mode de réalisation de l'invention.
La figure 5 illustre un bec de séparation de turbomachine axiale selon un exemple ne faisant pas partie de l'invention.
La figure 6 illustre un bec de séparation de turbomachine axiale selon un troisième mode de réalisation de l'invention.
La figure 7 illustre un bec de séparation de turbomachine axiale selon un quatrième mode de réalisation de l'invention.
La figure 8 illustre un bec de séparation de turbomachine axiale selon un cinquième mode de réalisation de l'invention.

### Description des modes de réalisation

Dans la description qui va suivre, les termes « intérieur » et « extérieur », tout comme les termes « interne » et « externe » renvoient à un positionnement par rapport à l'axe de rotation de la turbomachine.

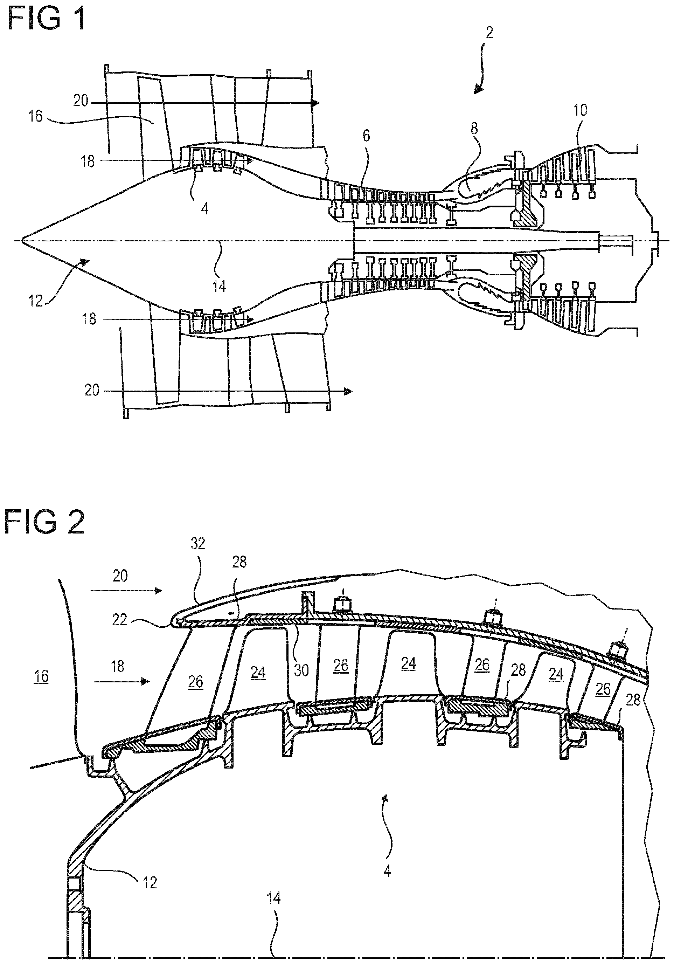

La figure 1 illustre une turbomachine axiale. Il s'agit dans ce cas précis d'un turboréacteur double-flux ; tout comme il pourrait s'agir d'un turboréacteur multi-flux, par exemple à trois flux annulaires. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes rotoriques associées à des rangées d'aubes statoriques. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan 16 est couplé au rotor 12. Il est monté sur un moyeu conique et génère un flux d'air entrant qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques qui peuvent être internes ou externes.

La figure 2 est une vue en coupe d'un compresseur basse-pression 4 d'une turbomachine axiale 2 telle que celle de la figure 1. On peut y observer une partie du fan 16 et le bec de séparation 22 du flux primaire 18 et du flux secondaire 20. Le rotor 12 comprend plusieurs rangées d'aubes rotoriques 24, par exemple trois. Le compresseur basse-pression 4 comprend plusieurs redresseurs, par exemple quatre, qui contiennent chacun une rangée d'aubes statoriques 26. Les redresseurs sont associés au fan 16 ou à une rangée d'aubes rotoriques pour redresser leurs flux d'air, de sorte à convertir la vitesse des flux en pression.

Le bec de séparation 22 est relié à la paroi de guidage du flux primaire 18, formant une virole externe 28 du premier étage de redresseur du compresseur. Cette dernière présente une surface intérieure exposée à une formation de glace. Cette formation peut se développer jusqu'à atteindre les aubes statoriques 26 du redresseur amont. La virole externe 28 a un rôle structurant et peut servir de support à une piste de matériau abrabable 30.

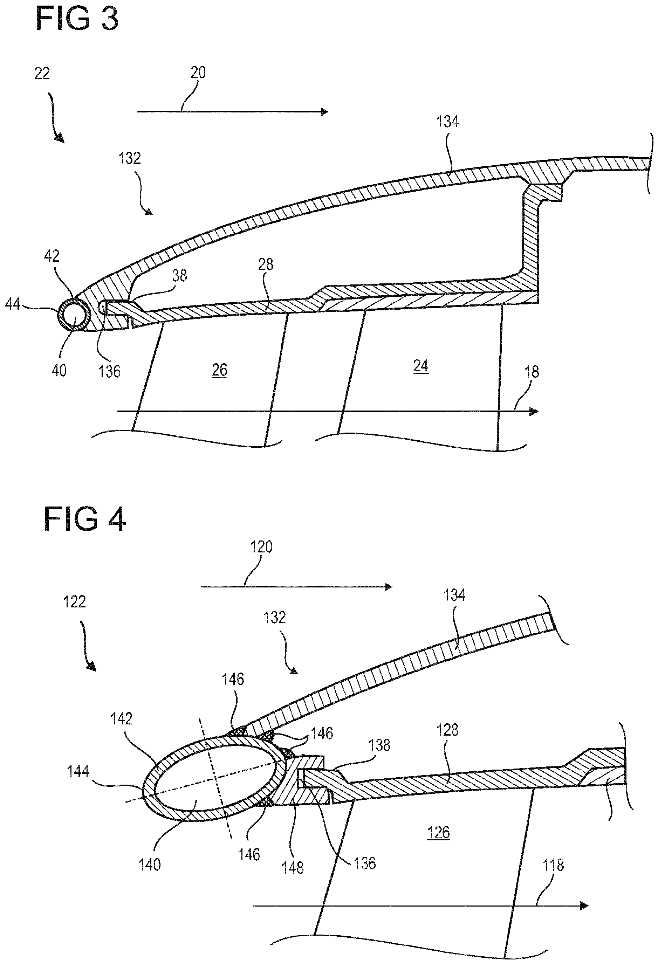

La figure 3 représente un bec de séparation 22 selon un premier mode de réalisation de l'invention.

Le bec de séparation 22 a une forme circulaire. Il présente un corps 132. Ce dernier présente une forme de révolution. Il comprend une paroi extérieure de révolution, formant une paroi de guidage 134 du flux secondaire 20. Il est relié à la virole externe 28 du redresseur via des moyens de fixation 136 disposés en sa partie amont. Ces moyens de fixation 136 peuvent comprendre une gorge annulaire ouverte axialement vers l'aval. La virole externe 28 peut comprendre des moyens de fixation complémentaire 38, par exemple une portée cylindrique apte à s'engager dans la gorge 136. La virole externe 28 peut en outre être reliée à la cloison extérieure 34 en sa partie aval.

Afin d'empêcher la formation de glace ou de la faire fondre de manière discontinue, le bec de séparation 22 présente un dispositif de dégivrage. Ce dernier comprend un canal 40 dans lequel circule un fluide caloporteur, préférentiellement de l'air chaud. Ce gaz chaud peut provenir d'un des compresseurs de la turbomachine. Un prélèvement au niveau du compresseur haute pression offrira un air d'avantage chaud. En sortie du compresseur, la température peut atteindre plusieurs centaines de degrés, éventuellement 700°C. Cet air nécessite un circuit de prélèvement d'air simple à réaliser. L'air chaud peut éventuellement comprendre des gaz d'échappement de la turbomachine.

Suivant un mode de réalisation de l'invention, le fluide caloporteur peut être de l'huile de la turbomachine. Cette huile peut servir à la lubrifier ou à actionner des pistons. L'huile peut provenir d'un réservoir, et sa circulation être assurée par des pompes. L'utilisation de ce fluide est judicieuse puisqu'elle permet de la refroidir.

Le canal 40 montre une forme annulaire, sa surface extérieure est torique. Le canal 40 est délimité par une paroi 42. Il parcourt sensiblement l'intégralité du tour du bec de séparation 22. Le canal 40 peur être sectorisé. Il peut être formé de plusieurs canaux parcourant une fraction du tour du bec de séparation 22. Leur réunion permet d'en parcourir l'ensemble.

Chaque secteur peut être alimenté indépendamment. Il peut admettre un flux d'huile puis l'évacuer via des conduits traversant le corps 132. Les conduits peuvent être des perçages réalisés entre la virole externe 28 et la paroi de guidage 134 du flux secondaire. Un réseau (non représenté) distribue et évacue le fluide caloporteur avant et après le passage dans le canal 40. Dans le cas d'air chaud, il est possible d'injecter l'air chaud dans le flux primaire grâce à des perçages réalisés du côté intérieur de la paroi.

La paroi 42 est placée de sorte à être en contact du flux entrant dans la turbomachine, et forme le bord d'attaque 44 qui partage le flux entrant en un flux primaire et un flux secondaire. Cette position permet d'offrir une efficacité optimale à l'huile puisqu'elle est acheminée au plus proche de la zone où se forme de la glace. Les calories sont ainsi conduites sans avoir besoin de traverser des épaisseurs importantes de matière qui peuvent limiter le rendement global.

La paroi 42 comprend un tube dont la section transversale présente un contour fermé, et qui peut être cylindrique ou polygonal. Une forme circulaire en simplifiera le cintrage. Il peut être soudé sur le corps 132 du bec de séparation 22 moyennant un brasage. Il peut également y être collé, ce qui en simplifie le remplacement en cas de dégradation. Il matérialise également un élément fusible, apte à absorber certains impacts sans qu'il n'y ait de dégradations du corps 132. En cas d'écrasement du tube, le système peut rester globalement fonctionnel tant que les autres secteurs permettent une circulation d'huile, et donc un dégivrage.

La figure 4 représente un bec de séparation selon un deuxième mode de réalisation de l'invention. Cette figure 4 reprend la numérotation des figures précédentes pour les éléments identiques ou similaires, la numérotation étant toutefois incrémentée de 100. Des numéros spécifiques sont utilisés pour les éléments spécifiques à ce mode de réalisation.

Le bec de séparation 122 comprend un corps 132 de révolution avec une paroi extérieure 134. Il est muni d'un dispositif de dégivrage avec un canal 140 délimité par une paroi 142. Le canal 140 parcourt le tour du bec de séparation 122. La section transversale de la paroi est profilée et présente un contour fermé. Le profil de la paroi 142 et du canal 140 ont des formes circulaires. Il peut présenter un aplatissement de sorte à former une came ou une ellipse. Le grand axe de l'ellipse ou de la came est incliné vers l'intérieur en amont. Cette particularité permet de séparer plus précisément les flux.

La paroi peut présenter une épaisseur variable, elle peut être plus fine là où elle est au contact du flux, et plus épaisse lorsqu'elle est au contact du reste du bec de séparation. Cette architecture permet d'apporter un maximum de calories là où peut se former de la glace, et renforce les zones de fixation. Soulignons qu'un épaississement peut faciliter la réalisation d'une soudure.

La paroi 142 est d'une part reliée à la paroi de guidage 134 du flux secondaire, et d'autre part à la virole externe 128. La paroi de guidage 134 du flux secondaire peut être directement fixée à la paroi 142 à l'aide de cordons de soudure 146. La virole externe 128 est, elle, reliée par l'intermédiaire d'un support 148 muni de moyens de fixation 136. Ces derniers peuvent être soudés à la paroi 142 et comprendre une gorge annulaire 136. Celle-ci est apte à coopérer avec les moyens de fixation complémentaire 138 de la virole externe 128.

La paroi 142 s'étend radialement depuis le niveau de la surface intérieure de la virole externe 128 jusqu'à la surface intérieure de la paroi extérieure 134. Ainsi, ces surfaces sont protégées directement contre une formation de glace. La paroi 142 s'étend sur une longueur axiale intéressante, ce qui en augmente la capacité d'échange thermique. Les aubes 126 deviennent ainsi mieux protégées contre une formation de glace.

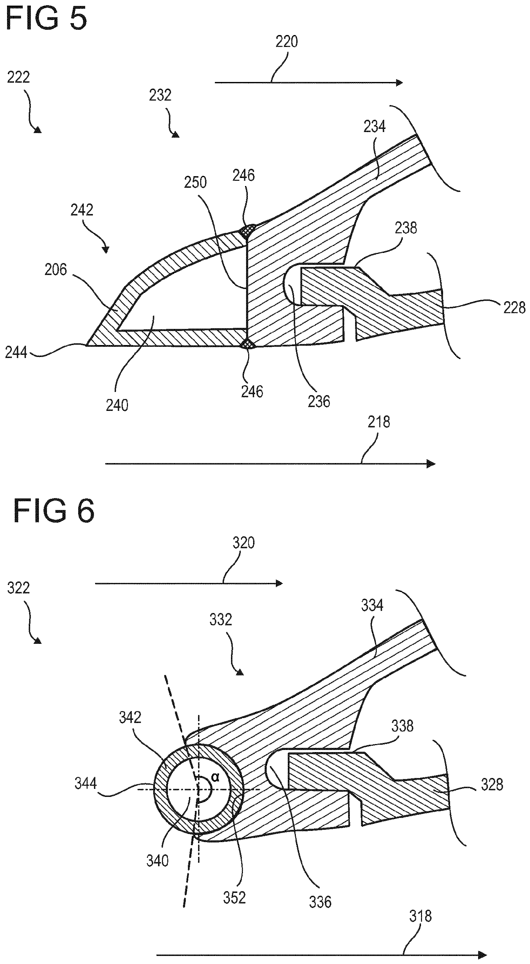

La figure 5 représente un bec de séparation selon un exemple ne faisant pas partie de l'invention. Cette figure 5 reprend la numérotation des figures précédentes pour les éléments identiques ou similaires, la numérotation étant toutefois incrémentée de 200. Des numéros spécifiques sont utilisés pour les éléments spécifiques à cet exemple.

Le bec de séparation 222 comprend un corps 232 de révolution avec une cloison extérieure formant une paroi de guidage 234 du flux secondaire. Il est muni d'un dispositif de dégivrage avec un canal 240 délimité par une paroi 242 profilée. La paroi 242 peut être soudée à l'aide de cordons 200 de soudure assurant l'étanchéité du canal 240. Le profil de la paroi peut comprendre des parties courbes ou droites, ce qui facilite la réalisation d'une géométrie souhaitée. Ces parties droites améliorent la résistance globale et les parties courbes peuvent concentrer l'absorption de l'énergie du choc en se déformant.

La section transversale de la paroi profilée 242 présente un contour ouvert. En effet, le corps 232 présente une surface frontale 250 s'étendant généralement radialement. Elle contribue à délimiter le canal 240 en combinaison avec la paroi 242. Cette particularité permet d'économiser du poids en évitant d'avoir un empilement de deux cloisons pouvant chacune assurer les fonctions de l'autre. La surface frontale 250 forme un support de montage essentiellement plan pour la paroi 242, et matérialise un appui orienté face aux éventuels impacts. De la sorte, la paroi 242 sera plus à même de résister à ces impacts. Cette dernière peut former un blindage mécanique.

La figure 6 représente un bec de séparation selon un troisième mode de réalisation de l'invention. Cette figure 6 reprend la numérotation des figures précédentes pour les éléments identiques ou similaires, la numérotation étant toutefois incrémentée de 300. Des numéros spécifiques sont utilisés pour les éléments spécifiques à ce mode de réalisation.

Le bec de séparation 322 comprend un corps 332 de révolution avec une cloison extérieure formant une paroi de guidage 334 du flux secondaire. Il est muni d'un dispositif de dégivrage avec un canal 340 délimité par une paroi 342.

Le corps 332 présente une gorge annulaire amont 352. Cette gorge présente une section permettant un engagement de matière. Elle peut avoir une forme circulaire et décrire un angle α supérieur à 180°, préférentiellement sensiblement supérieur à 180°.

A l'intérieur de la gorge amont 352 est montée une paroi 342 délimitant un canal annulaire 340. La section transversale de la paroi 342 présente un contour fermé. Néanmoins, dans un exemple ne faisant pas partie de l'invention, la section transversale de la paroi 342 peut au contraire présenter un contour ouvert, le canal étant alors, dans ce cas uniquement, au moins partiellement matérialisé par la surface de la gorge amont 352. La gorge annulaire amont 352 permet un montage de la paroi 342 dans le bec de séparation 322 par encastrement mécanique. Ce mode de fixation peut être discontinu.

Ce mode de réalisation de l'invention permet de se dispenser de moyens de fixation autres, tels une soudure ou un collage. Il simplifie donc une opération de montage et/ou un éventuel remplacement. Par ailleurs, il offre d'avantage de liberté de choix pour les matériaux respectifs de la paroi 342 et du corps. Les contraintes liées à la soudabilité de nuances d'alliages différentes sont contournées, tout comme celles générées par la dilatation différentielle.

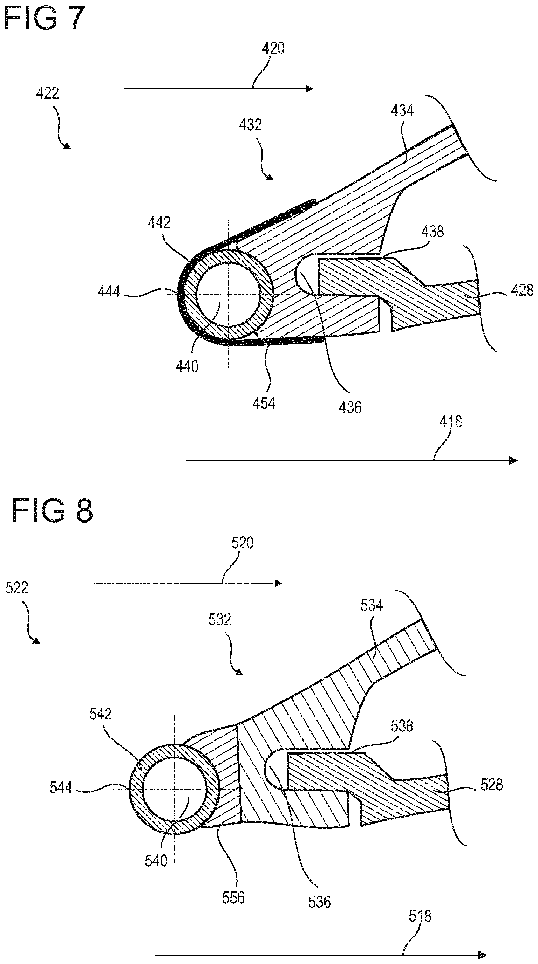

La figure 7 représente un bec de séparation selon un quatrième mode de réalisation de l'invention. Cette figure 7 reprend la numérotation des figures précédentes pour les éléments identiques ou similaires, la numérotation étant toutefois incrémentée de 400. Des numéros spécifiques sont utilisés pour les éléments spécifiques à ce mode de réalisation.

Le bec de séparation 422 comprend un corps 432 de révolution avec une cloison extérieure formant une paroi de guidage 434 du flux secondaire. Il est muni d'un dispositif de dégivrage avec un canal 440 délimité par une paroi 442, par exemple tubulaire. La section transversale de la paroi 442 présente un contour fermé. Le corps 432 présente sur sa face amont une gorge circulaire dans laquelle est maintenue la paroi 442 à l'aide de bandes de fixation 454, par exemple métalliques. Entre deux et trente bandes 454 réparties circulairement peuvent être employées.

Les bandes de fixation 454 permettent de bloquer la paroi 442 dans la gorge en la sanglant. Elles sont disposées de manière discontinue. Elles sont disposées axialement et forment des « U » ou des « V » qui épousent la paroi 442. Elles peuvent être fixées au corps 432, et éventuellement à la paroi 442, par collage et/ou par soudage. Les bandes recouvrent les parois, notamment au niveau du bord d'attaque 444. Cependant elles ne réduisent pas l'effet dégivrant tant elles sont fines et étroites. Leurs épaisseurs peuvent être comprises entre 0,10 mm et 3,00 mm. Leurs largeurs peuvent mesurer entre 5,00 mm et 40,00 mm. Ce mode de fixation permet de contourner des problèmes de fixation liés à des différences de matériau entre le corps 432 et la paroi 442. Le mode de fixation par bande simplifie le remplacement de la paroi.

La figure 8 représente un bec de séparation selon un cinquième mode de réalisation de l'invention. Cette figure 8 reprend la numérotation des figures précédentes pour les éléments identiques ou similaires, la numérotation étant toutefois incrémentée de 500. Des numéros spécifiques sont utilisés pour les éléments spécifiques à ce mode de réalisation.

Le bec de séparation 522 comprend un corps 532 de révolution avec une cloison extérieure formant une paroi de guidage 534 du flux secondaire. Il est muni d'un dispositif de dégivrage avec un canal 540 délimité par une paroi 542, éventuellement tubulaire. La section transversale de la paroi 542 présente un contour fermé. La paroi 542 peut être reliée au corps 532 via une pièce intermédiaire 556. Celle-ci peut être fixée au corps 532 et à la paroi 542 par collage et/ou soudage.

La pièce intermédiaire 556 peut être réalisée en un matériau isolant, qui présente une conductivité thermique inférieure à celle des matériaux de la paroi 542 et/ou du corps 532. Elle peut être réalisée en matériau composite, éventuellement avec une matrice polymère. Elle peut également être réalisée en céramique. Cette particularité de l'invention permet de concentrer l'apport de chaleur au niveau du bord d'attaque 544, et de limiter la conduction de chaleur dans les parois de guidage (528, 534). Celles-ci seront moins sujettes à la dilatation, et l'efficacité du dispositif de dégivrage sera accrue.

Il est possible de réaliser un bec de séparation et de dégivrage avec une paroi selon l'exemple de la figure 5 qui est fixée sur une pièce intermédiaire selon le cinquième mode de réalisation de l'invention, cette dernière présentant une gorge annulaire selon le troisième mode de réalisation de l'invention dans laquelle se place la paroi. Il est également possible d'améliorer la fixation de la paroi à l'aide de bandes de fixation selon le cinquième mode de réalisation de l'invention. Le fluide employé peut être de l'air ou de l'huile, un recours à des moyens pour adapter l'étanchéité est envisageable.

## Revendications

1. Bec de séparation (22 ; 122 ; 322 ; 422 ; 522) d'une turbomachine axiale apte à séparer un flux annulaire entrant dans la turbomachine en un flux primaire (18 ; 118 ; 218 ; 318 ; 418 ; 518) et en un flux secondaire (20 ; 120 ; 320 ; 420 ; 520), le bec comprenant :
- un bord d'attaque annulaire (44 ; 144 ; 344 ; 444 ; 544) ;
- des parois de guidage (28, 34 ; 128, 134 ; 328, 334 ; 428 ; 434 ; 528, 534) des flux primaire et secondaire, s'étendant depuis le bord d'attaque ;
- un canal (40 ; 140 ; 340 ; 440 ; 540) de dégivrage du bord d'attaque s'étendant de manière annulaire le long dudit bord, le canal étant configuré pour conduire un fluide, et comprenant une paroi (42 ; 142 ; 342 ; 442 ; 542) dont la section transversale présente un contour fermé ;
**caractérisé en ce que** la paroi (42 ; 142 ; 342 ; 442 ; 542) du canal (40 ; 140 ; 340 ; 440 ; 540) forme le bord d'attaque (44 ; 144 ; 344 ; 444 ; 544), les parois de guidage des flux primaire et secondaire étant fixées à ladite paroi.

2. Bec de séparation (22 ; 122 ; 322 ; 422 ; 522) selon la revendication 1, **caractérisé en ce que** le contour fermé présente un profil circulaire (40 ; 340 ; 440 ; 540) ou ellipsoïdal (140), le grand axe de l'ellipse étant incliné vers l'amont et le centre de la turbomachine par rapport à l'axe principal d'écoulement du bec, l'inclinaison étant préférentiellement comprise entre 5° et 30°.

3. Bec de séparation (22 ; 122 ; 322 ; 422 ; 522) selon l'une des revendications 1 à 2, **caractérisé en ce que** la paroi (42 ; 142 ; 342) du canal de dégivrage (40 ; 140 ; 340 ; 440 ; 540) présente une épaisseur variable, l'épaisseur étant préférentiellement réduite sur une partie amont du canal.

4. Bec de séparation (322) selon l'une des revendications 1 à 3, **caractérisé en ce que** la paroi (342) du canal de dégivrage (340) est montée par encastrement sur l'une ou au moins une des parois (334) de guidage des flux primaire et secondaire, l'encastrement étant préférentiellement discontinu le long du profil annulaire du bord d'attaque (344).

5. Bec de séparation (522) selon l'une des revendications 1 à 4, **caractérisé en ce qu'**il comprend une pièce intermédiaire (556) disposée entre la paroi (542) du canal de dégivrage (540) et le corps (534), préférentiellement la pièce intermédiaire (556) comprend un matériau isolant.

6. Bec de séparation (22 ; 122 ; 322 ; 422 ; 522) selon l'une des revendications 1 à 5, **caractérisé en ce que** le contour de la section transversale de la paroi (42 ; 142 ; 342 ; 442 ; 542) du canal de dégivrage (40 ; 140 ; 340 ; 440 ; 540) comprend une portion avec un rayon de courbure inférieur à 10,00 mm, préférentiellement inférieur à 5,00 mm, plus préférentiellement inférieur à 2,00 mm, encore plus préférentiellement inférieur à 1,00 mm, ladite portion formant l'extrémité amont du bord d'attaque (44 ; 144 ; 344 ; 444 ; 544).

7. Bec de séparation (22 ; 122 ; 322 ; 422 ; 522) selon l'une des revendications 1 à 6, **caractérisé en ce que** le canal (40 ; 140 ; 340 ; 440 ; 540) est segmenté et comprend au moins deux segments qui parcourent chacun sensiblement la moitié du profil annulaire du bord d'attaque, le canal comprenant préférentiellement six segments de canaux parcourant chacun sensiblement un sixième dudit profil.

8. Bec de séparation (22 ; 122 ; 322 ; 422 ; 522) selon l'une des revendications 1 à 7, **caractérisé en ce que** la paroi de guidage (34 ; 134 ; 334 ; 434 ; 534) du flux secondaire (20 ; 120 ; 320) forme un corps (32 ; 132 ; 332 ; 432 ; 532) de révolution dudit bec, la paroi de guidage (28 ; 128 ; 328 ; 428 ; 528) du flux primaire (18 ; 118 ; 318 ; 418 ; 518) formant une virole externe de redresseur aubagé.

9. Bec de séparation (422) selon la revendication 8, **caractérisé en ce qu'**il comprend des bandes de fixation (454), préférentiellement métalliques, disposées contre la paroi du canal de dégivrage et les parois de guidage des flux primaire et secondaire.

10. Bec de séparation (122) selon l'une des revendications 1 à 9, **caractérisé en ce que** la partie amont de la paroi de guidage (128) du flux primaire (118) est reliée à la paroi de guidage (134) du flux secondaire (120) par l'intermédiaire de la paroi (142) du canal de dégivrage (140).

11. Bec de séparation (22 ; 122 ; 322 ; 422 ; 522) selon l'une des revendications 1 à 10, **caractérisé en ce qu'**il comprend une gorge annulaire (36 ; 136 ; 336 ; 436 ; 536) de réception d'un bord amont de la paroi de guidage (28 ; 128 ; 328 ; 428 ; 528) du flux primaire (18 ; 118 ; 318 ; 418 ; 518), le canal de dégivrage (40 ; 140 ; 340 ; 440 ; 540) étant situé en amont de ladite gorge.

12. Compresseur (4) de turbomachine axiale (2), comprenant un bec de séparation (22) apte à séparer un flux annulaire entrant dans la turbomachine en un flux primaire (18) et en un flux secondaire (20), **caractérisé en ce que** le bec de séparation (22) est conforme à l'une des revendications 1 à 11.

13. Turbomachine axiale (2) comprenant une soufflante d'entrée (16) suivie d'un compresseur (4), **caractérisée en ce que** le compresseur (4) est conforme à la revendication 12.

## Patentansprüche

1. Teilernase (22; 122; 322; 422; 522) einer axialen Turbomaschine, die dazu bestimmt ist, eine ringförmige Strömung in der Turbomaschine in eine Primärströmung (18; 118; 318; 418; 518) und eine Sekundärströmung (20; 120; 320; 420; 520) zu trennen, wobei die Nase Folgendes umfasst:
- eine ringförmige Vorderkante (44; 144; 344; 444; 544);
- Führungswände (28, 34; 128, 134; 328, 334; 428 , 434; 528, 534) für die Primär- und Sekundärströmungen, die sich von der Vorderkante aus erstrecken;
- einen Vorderkanten-Enteisungskanal (40; 140; 340; 440; 540), der sich ringförmig entlang der Kante erstreckt, wobei der Kanal so ausgelegt ist, dass er eine Flüssigkeit leitet und eine Wand (42; 142; 342; 442; 542) mit einem Querschnitt mit geschlossener Kontur umfasst;
**dadurch gekennzeichnet, dass** die Wand (42; 142; 342; 442; 542) des Kanals (40; 140; 340; 440; 540) die Vorderkante (44; 144; 344; 444; 544) bildet, wobei die Führungswände der Primär- und Sekundärströmungen an der genannten Wand befestigt sind.

2. Teilernase (22; 122; 322; 422, 522) nach Anspruch 1, **dadurch gekennzeichnet, dass** die geschlossene Kontur ein kreisförmiges (40; 340; 440; 540) oder elliptisches (140) Profil aufweist, wobei die Hauptachse der Ellipse stromaufwärts und zur Mitte der Turbomaschine hin relativ zur Strömungshauptachse der Nase geneigt ist, wobei die Neigung vorzugsweise zwischen 5° und 30° liegt.

3. Teilernase (22; 122; 322; 422; 522) nach einem der Ansprüche 1 und 2, **dadurch gekennzeichnet, dass** die Wand (42; 142; 342) des Enteisungskanals (40; 140; 340; 440; 540) eine variable Dicke aufweist, wobei die Dicke vorzugsweise an einem stromaufwärts gelegenen Teil des Kanals reduziert ist.

4. Teilernase (322) nach einem der Ansprüche 1 bis 3, **dadurch gekennzeichnet, dass** die Wand (342) des Enteisungskanals (340) in eine oder mindestens eine der primären und sekundären Strömungsführungswände eingesenkt ist, wobei die Einsenkung vorzugsweise entlang des ringförmigen Profils der Vorderkante (344) nicht durchgehend ist.

5. Teilernase (522) nach einem der Ansprüche 1 bis 4, **dadurch gekennzeichnet, dass** sie ein Mittelteil (556) aufweist, das zwischen der Wand (542) des Enteisungskanals (540) und dem Gehäuse (534) angeordnet ist, wobei das Mittelteil (556) vorzugsweise ein Isoliermaterial enthält.

6. Teilernase (22; 122; 322; 422; 522) nach einem der Ansprüche 1 bis 5, **dadurch gekennzeichnet, dass** die Querschnittskontur der Wand (42; 142; 342; 442; 542) des Enteisungskanals (40; 140; 340; 440; 540) einen Teil mit einem Krümmungsradius von weniger als 10,00 mm aufweist, vorzugsweise weniger als 5,00 mm, mehr vorzugsweise weniger als 2,00 mm , und noch mehr vorzugsweise weniger als 1,00 mm, die den genannten Teil bilden, der das stromaufwärtige Ende der Vorderkante (44; 144; 344; 444; 544) bildet.

7. Teilernase (22; 122; 322; 422; 522) nach einem der Ansprüche 1 bis 6, **dadurch gekennzeichnet, dass** der Kanal (40; 140; 340; 440; 540) segmentiert ist und mindestens zwei Segmente umfasst, die jeweils im Wesentlichen durch die Hälfte des ringförmigen Profils der Vorderkante verlaufen, wobei der Kanal vorzugsweise sechs Segmente umfasst, die jeweils im Wesentlichen durch ein Sechstel des Profils verlaufen.

8. Teilernase (22; 122; 322; 422; 522) nach einem der Ansprüche 1 bis 7, **dadurch gekennzeichnet, dass** die Führungswand (34; 134; 334; 434; 534) der Sekundärströmung (20; 120; 320) einen Rotationskörper (32; 132; 332; 432; 532) der Nase bildet, wobei die Führungswand (28; 128; 328; 428; 528) der Primärströmung (18; 118; 318; 418; 518) eine Außenwand des Stators mit Schaufeln bildet.

9. Teilernase (422) nach Anspruch 8, **dadurch gekennzeichnet, dass** sie Befestigungsstreifen (454), vorzugsweise aus Metall, aufweist, die an der Wand des Enteisungskanals und den Führungswänden der Primär- und Sekundärströme angeordnet sind.

10. Teilernase (122) nach einem der Ansprüche 1 bis 9, **dadurch gekennzeichnet, dass** der stromaufwärtige Teil der Führungswand (128) des Primärströmungsabschnittes (118) mit der Führungswand (134) der Sekundärströmung (120) durch die Wand (142) des Enteisungskanals (140) verbunden ist.

11. Teilernase (22; 122; 322; 422; 522) nach einem der Ansprüche 1 bis 10, **dadurch gekennzeichnet, dass** sie eine ringförmige Nut (36; 136; 336; 436; 536) zum Einführen eines stromaufwärtigen Randes der Führungswand (28; 128; 328; 428; 528) der Primärströmung (18; 118; 318; 418; 518) aufweist, wobei der Enteisungskanal (40; 140; 340; 440; 540) stromaufwärts der genannten Nut angeordnet ist.

12. Kompressor (4) einer axialen Turbomaschine (2) mit einer Teilernase (22), die dazu ausgelegt ist, eine in die Turbomaschine eintretende ringförmige Strömung in eine Primärströmung (18) und eine Sekundärströmung (20) aufzuteilen, **dadurch gekennzeichnet, dass** die Teilernase (22) einem der Ansprüche 1 bis 11 entspricht.

13. Axiale Turbomaschine (2) mit einem Einlassgebläse (16), gefolgt von einem Kompressor (4), **dadurch gekennzeichnet, dass** der Kompressor (4) gemäß Anspruch 12 ist.

## Claims

1. Splitter nose (22; 122; 322; 422; 522) of an axial turbomachine designed to separate an annular flow into the turbomachine into a primary flow (18; 118; 318; 418; 518) and a secondary flow (20; 120; 320; 420; 520) , the nose comprising:
- an annular leading edge (44; 144; 344; 444; 544),
- guide walls (28, 34; 128, 134; 328, 334; 428 , 434; 528, 534) for the primary and secondary flows, extending from the leading edge;
- a leading edge de-icing channel (40; 140; 340; 440; 540) extending annularly along the said edge, the channel being designed to conduct a fluid and comprising a wall (42; 142; 342; 442; 542) with a cross-section having a closed contour;
**characterized in that** the wall (42; 142; 342; 442; 542) of the channel (40; 140; 340; 440; 540) forms the leading edge (44; 144; 344; 444; 544), the guide walls of the primary and secondary flows being attached to the said wall.

2. Splitter nose (22; 122; 322; 422, 522) in accordance with Claim 1, **characterized in that** the closed contour has a circular (40; 340; 440; 540) or elliptical (140) profile, the major axis of the ellipse being tilted upstream and towards the centre of the turbomachine relative to the main axis of the nose, the inclination preferably being between 5° and 30°.

3. Splitter nose (22; 122; 322; 422; 522) in accordance with one of Claims 1 and 2, **characterized in that** the wall (42; 142; 342) of the de-icing channel (40; 140; 340; 440; 540) has a variable thickness, the thickness being preferably reduced at an upstream part of the channel.

4. Splitter nose (322) in accordance with one of Claims 1 to 3, **characterized in that** the wall (342) of the de-icing channel (340) is recessed into one or at least one of the primary and secondary stream guide walls, the recessing preferably being discontinuous along the annular profile of the leading edge (344).

5. Splitter nose (522) in accordance with one of Claims 1 to 4, **characterized in that** it comprises an intermediate part (556) located between the wall (542) of the de-icing channel (540) and the body (534), preferably the intermediate part (556), comprises an insulating material.

6. Splitter nose (22; 122; 322; 422; 522) in accordance with one of Claims 1 to 5, **characterized in that** the contour of the cross section of the wall (42; 142; 342; 442; 542) of the de-icing channel (40; 140; 340; 440; 540) comprises a part with a radius of curvature less than 10.00 mm, preferably less than 5.00 mm, more preferably less than 2.00 mm , even more preferably less than 1.00 mm, forming the said part forming the upstream end of the leading edge (44; 144; 344; 444; 544).

7. Splitter nose (22; 122; 322; 422; 522) in accordance with one of Claims 1 to 6, **characterized in that** the channel (40; 140; 340; 440; 540) is segmented and comprises at least two segments each passing substantially through half of the annular profile of the leading edge, the channel comprising preferably six segments each substantially passing through one sixth of the said profile.

8. Splitter nose (22; 122; 322; 422; 522) in accordance with one of Claims 1 to 7, **characterized in that** the guide wall (34; 134; 334; 434; 534) of the secondary flow (20; 120; 320) forms a body (32; 132; 332; 432; 532) of revolution of the said nose, the guide wall (28; 128; 328; 428; 528) of the of the primary flow (18; 118; 318; 418; 518) forming an external wall of the bladed stator.

9. Splitter nose (422) in accordance with Claim 8, **characterized in that** it comprises fastening strips (454), preferably made of metal, located against the wall of the de-icing channel and the guide walls of the primary and secondary flows.

10. Splitter nose (122) in accordance with one of Claims 1 to 9, **characterized in that** the upstream part of the guide wall (128) of the primary flow (118) portion is connected to the guide wall (134) of the secondary flow (120) through the wall (142) of the de-icing channel (140).

11. Splitter nose (22; 122; 322; 422; 522) in accordance with one of Claims 1 to 10, **characterized in that** it comprises an annular groove (36; 136; 336; 436; 536) for inserting an upstream edge of the guide wall (28; 128; 328; 428; 528) of the primary flow (18; 118; 318; 418; 518), the de-icing channel (40; 140; 340; 440; 540) being located upstream of the said groove.

12. Compressor (4) of an axial turbomachine (2) comprising a splitter nose (22) designed to separate an annular flow entering the turbomachine into a primary flow (18) and a secondary flow (20), **characterized in that** the splitter nose (22) is in accordance with one of Claims 1 to 11.

13. Axial turbomachine (2) comprising an inlet fan (16) followed by a compressor (4), **characterized in that** the compressor (4) is in accordance with Claim 12.
